# EUROPÄISCHE PATENTSCHRIFT

(11) **EP 3 526 367 B1**
(45) Veröffentlichungstag und Bekanntmachung des Hinweises auf die Patenterteilung: **06.12.2023**
(21) Anmeldenummer: 17791608.7
(22) Anmeldetag: 11.10.2017
(51) Int. Cl.: C23C 24/00, G01K 1/14, B32B 18/00, C04B 35/03, C04B 35/10, C04B 35/465, C04B 35/48, C04B 35/622

(54) **VERFAHREN ZUR HERSTELLUNG EINES SENSORS, SENSOR UND VERWENDUNG EINES SENSORS**
METHOD FOR PRODUCING A SENSOR, SENSOR, AND USE OF A SENSOR
PROCÉDÉ DE FABRICATION D'UN CAPTEUR, CAPTEUR ET UTILISATION D'UN CAPTEUR

(30) Priorität: 11.10.2016 DE 102016119340
(43) Veröffentlichungstag der Anmeldung: 21.08.2019
(73) Patentinhaber: Yageo Nexensos GmbH, 63801 Kleinostheim (DE)
(72) Erfinder: WIENAND, Karlheinz, 63741 Aschaffenburg (DE); DIETMANN, Stefan, 63755 Alzenau (DE); ZINKEVICH,Matsvei, 63773 Goldbach (DE); MOOS, Ralf, 95447 Bayreuth (DE); SCHUBERT, Michael, 95548 Bayreuth (DE); TURWITT, Martin, 63486 Bruchköbel (DE)
(74) Vertreter: Meissner Bolte Partnerschaft mbB
(86) Internationale Anmeldenummer: PCT/EP2017/075982
(87) Internationale Veröffentlichungsnummer: WO 2018/069415

(56) Entgegenhaltungen:
- EP-A1- 1 231 294
- JP-A- 2013 142 582
- US-A1- 2009 224 753
- US-A1- 2016 056 448

## Beschreibung

Die Erfindung bezieht sich auf ein Verfahren zur Herstellung eines Sensors, insbesondere eines Temperatursensors, umfassend mindestens eine elektrisch leitfähige Schicht und mindestens eine weitere Schicht, insbesondere eine Passivierungsschicht und/oder eine Isolationsschicht. Außerdem betrifft die Erfindung einen Sensor, insbesondere einen Temperatursensor, umfassend mindestens eine elektrisch leitfähige Schicht und mindestens eine weitere Schicht, insbesondere eine Passivierungsschicht und/oder eine Isolationsschicht, wobei der Sensor vorzugsweise mittels eines erfindungsgemäßen Verfahrens hergestellt ist. Des Weiteren betrifft die Erfindung die Verwendung eines erfindungsgemäßen Sensors in einem Fahrzeug.

Es ist bekannt, bei Temperatursensoren zum Schutz vor Vergiftungen Passivierungsschichten vorzusehen. Hierbei werden Passivierungsschichten beispielsweise auf Platin-Strukturen von Temperaturwiderständen aufgetragen. Passivierungsschichten werden beispielsweise mittels PVD- oder Dickschichtverfahren aufgetragen. Derart aufgebrachte Passivierungsschichten sind jedoch nicht vollkommen dicht.

Bei einem PVD-Verfahren wird das Passivierungsmaterial, insbesondere Aluminiumoxid-Material (Al₂O₃), in die Gasphase überführt und es kondensiert als Film auf der Oberfläche des Sensors. Neben dem hierbei auftretenden Stängelwachstum ist auch der Phasenzustand des Aufdampfmaterials von Nachteil. Das beispielsweise verwendete Aluminiumoxid liegt in der γ-Phase vor, die sich bei Temperaturbeaufschlagung in die stabile α-Phase umwandelt. Eine derartige Phasenumwandlung kann mit einem Volumenschrumpf von bis zu ca. 8 % verbunden sein. Ein derartiger Volumenschrumpf führt zu Rissbildungen in der aufgetragenen Passivierungsschicht.

Auch eine Auftragung mittels Sputter-Verfahrens, bei dem das Passivierungsmaterial, insbesondere das Aluminiumoxid, im Plasma mittels Ionenbeschuss von einem Target abgetragen wird, weist die beschriebenen Nachteile auf.

Im Rahmen eines Dickschichtverfahrens wird eine Paste mit Passivierungsmaterial, insbesondere eine Paste mit Aluminiumoxid-Partikeln, mittels Siebdruckverfahren auf die Oberfläche gedruckt. Nach dem Austreiben der Organik werden die Aluminiumoxid-Partikel bei Temperaturen von 1.000 °C - 1.500 °C gesintert und weisen auch bei Kombination von verschiedenen Partikeldurchmessern zum Erzielen einer hohen Packungsdichte noch Hohlräume und Fehlstellen auf.

Um die nach den beschriebenen Verfahren hergestellten Passivierungsschichten abzudichten, ist es bekannt, zusätzlich weitere Schichten, die beispielsweise aus Glas bestehen, aufzubringen. Temperaturbeständige Gläser weisen allerdings einen sehr hohen Siliziumoxid-Anteil (SiO₂) auf, der unter ggf. reduzierender Atmosphäre zu Silizium reduziert wird. Sofern Silizium durch Poren und Risse zur elektrisch leitfähigen Schicht, insbesondere zur Platinschicht, diffundieren kann, führt dies zu einer Vergiftung der elektrisch leitfähigen Schicht. Des Weiteren ist eine Platinsilizid-Bildung möglich, wobei dies zu einer Zerstörung der elektrisch leitfähigen Schicht, insbesondere der Platinstruktur, führen kann.

In EP 1 231 294 A1 wird prinzipiell eine Verbundstruktur sowie ein zugehöriges Herstellungsverfahren offenbart, wobei die Verbundstruktur jeweils eine spezielle Morphologie aufweist. Zur Herstellung dieser Verbundstrukturen wird ein spezielles ADM-Verfahren angegeben, so dass derartige Strukturen abgeschieden werden können. Es wird in allgemeiner Art und Weise beschrieben, dass ein Aluminiumoxid-Material zur Herstellung einer Schicht verwendet werde kann. Genauer Informationen zur hergestellten Schicht fehlen.

Der Erfindung liegt die Aufgabe zu Grunde, ein weiterentwickeltes Verfahren zur Herstellung eines Sensors, insbesondere eines Temperatursensors, anzugeben, mit dessen Hilfe hermetisch dichte Sensorschichten hergestellt werden können.

Des Weiteren ist es Aufgabe der vorliegenden Erfindung, einen weiterentwickelten Sensor mit mindestens einer hermetisch dichten Schicht, insbesondere mindestens einer elektrisch leitfähigen Schicht und/oder mindestens einer weiteren Schicht, insbesondere einer Passivierungsschicht und/oder Isolationsschicht, die hermetisch dicht ausgebildet ist, anzugeben. Ferner ist es Aufgabe der vorliegenden Erfindung, eine passende Verwendungsmöglichkeit für den erfindungsgemäßen Sensor anzugeben.

Erfindungsgemäß wird diese Aufgabe im Hinblick auf ein Verfahren zur Herstellung eines Sensors, insbesondere eines Temperatursensors, durch die Merkmale des Anspruches 1 gelöst. Im Hinblick auf einen Sensor, insbesondere einen Temperatursensor, umfassend mindestens eine elektrisch leitfähige Schicht und mindestens eine weitere Schicht, insbesondere eine Passivierungsschicht und/oder eine Isolationsschicht, wird die Aufgabe durch die Merkmale des Anspruches 5 gelöst. Im Hinblick auf eine Verwendung eines erfindungsgemäßen Sensors wird die Aufgabe durch die Merkmale des Anspruches 12 gelöst.

Die Erfindung beruht auf dem Gedanken, ein Verfahren zur Herstellung eines Sensors, insbesondere eines Temperatursensors, der mindestens eine elektrisch leitfähige Schicht und mindestens eine weitere Schicht, insbesondere eine Passivierungsschicht und/oder eine Isolationsschicht, umfasst, anzugeben, wobei die elektrisch leitfähige Schicht und/oder die weitere Schicht, insbesondere die Passivierungsschicht und/oder die Isolationsschicht, mittels Aerosol-Abscheidung (Aerosol Deposition Method [ADM]) hergestellt wird.

Bei der ADM handelt es sich um ein sogenanntes kaltes Beschichtungsverfahren, bei dem ein geeignetes Pulver in ein Aerosol überführt wird. Dabei wird in einer Beschichtungskammer und einem Aerosolgenerator ein Grobvakuum im Bereich von 1 bis 50 mbar erzeugt. Der durch Zugabe eines Prozessgases in den Aerosolgenerator resultierende Druckunterschied transportiert das Aerosol hin zu einer Düse, in der es auf mehrere 100 m/s beschleunigt und anschließend auf ein Substrat abgeschieden wird. Dabei erfolgt neben einer plastischen Verformung auch ein Aufbrechen der Pulverpartikel in nm-große Bruchstücke, welche sich zu einer dichten und gut haftenden Schicht anordnen.

Mit anderen Worten beruht das erfindungsgemäße Verfahren darauf, dass mindestens eine Schicht des Sensors mittels Aerosol-Abscheidung hergestellt wird.

Das erfindungsgemäße Verfahren weist folgende Schritte auf:
a) Bereitstellen eines Sensorträgers;
b) Unmittelbares oder mittelbares Aufbringen der mindestens einen elektrisch leitfähigen Schicht auf den Sensorträger;
c) Aufbringen der mindestens einen weiteren Schicht, insbesondere der Passivierungsschicht und/oder der Isolationsschicht, mittels Aerosol-Abscheidung.

Es ist möglich, dass die elektrisch leitfähige Schicht, die insbesondere Platin umfasst, direkt auf den Sensorträger aufgetragen wird.

Des Weiteren ist es möglich, dass zwischen dem Sensorträger und der elektrisch leitfähigen Schicht mindestens eine Zwischenschicht ausgebildet wird. Die elektrisch leitfähige Schicht wird demnach nach dem Auftrag der mindestens einen Zwischenschicht auf diese mindestens eine Zwischenschicht aufgebracht.

Der Sensorträger kann aus Keramik und/oder Metall und/oder einer Metalllegierung und/oder Glas und/oder Glaskeramik und/oder Kunststoff gebildet sein. Insbesondere ist der Sensorträger aus isolierenden Oxiden, wie z.B. reinem Aluminiumoxid (Al₂O₃) oder mit Zuschlagsstoffen versehenem Aluminiumoxid und/oder verschiedenen Zirkoniumoxid-Keramiken oder Zirkoniummischoxidkeramiken und/oder verschiedenen Magnesiumoxidverbindungen (MgO) und/oder Siliziumoxid (SiOz) zusammengesetzt.

Vorzugsweise liegt der thermische Ausdehnungskoeffizient des Sensorträgers im Bereich von 0,05 • 10⁻⁶ K⁻¹ bis 15 • 10⁻⁶ K⁻¹.

Des Weiteren ist es vorteilhaft, wenn der spezifische elektrische Widerstand des Sensorträgers bei 600 °C größer als 10¹⁰ Ωcm ist.

In einer weiteren Ausführungsform der Erfindung kann der Sensorträger elektrisch leitfähig ausgebildet sein.

Es ist möglich, dass auch die Zwischenschicht mittels Aerosol-Abscheidung (Aerosol Deposition Method) auf den Sensorträger aufgetragen wird.

Bei der Aerosol-Abscheidung (ADM), insbesondere im Schritt c), wird ein Pulver aus in der α-Phase vorliegenden Aluminiumoxid (Al₂O₃) mit einer Reinheit der Ausgangsstoffe von mindestens 94 Gew.-% verwendet.

Aufgrund der Reinheit des verwendeten Pulvers kann eine besonders hermetisch dichte Schicht hergestellt werden, wobei keine Fremdmaterialien eingelagert werden, die in einem späteren Verlauf zu einer Vergiftung des Sensors, insbesondere der elektrisch leitfähigen Schicht, führen können.

Bei der Aerosol-Abscheidung (ADM) im Schritt c) wird als Trägergas Sauerstoff (O₂) verwendet.

Des Weiteren erfolgt vorzugsweise während der Aerosol-Abscheidung eine Temperaturbeaufschlagung von höchstens 150 °C. Dies bringt u.a. zum Ausdruck, dass es sich bei dem vorliegenden erfindungsgemäßen Verfahren um ein sogenanntes kaltes Beschichtungsverfahren handelt.

Die Aerosol-Abscheidung wird vorzugsweise in einer Beschichtungskammer durchgeführt. Insbesondere wird während der Aerosol-Abscheidung in der Beschichtungskammer ein Vakuum hergestellt. Die Aerosol-Abscheidung erfolgt in der Beschichtungskammer somit unter Vakuum.

Bei der erfindungsgemäßen Herstellung einer elektrisch leitfähigen Schicht und/oder einer weiteren Schicht, insbesondere einer Passivierungsschicht und/oder einer Isolationsschicht, wird zunächst das Trägergas in einen Generator eingeleitet, in dem das Beschichtungspulver in ein Aerosol umgewandelt wird, das heißt das Beschichtungspulver wird in einem Trägergasstrom fein verteilt. Bei dem Beschichtungspulver handelt es sich insbesondere um isolierende Werkstoffe, bevorzugt um Oxide, besonders bevorzugt um Aluminiumoxid. Durch eine Düse wird das Aerosol in eine Beschichtungskammer unter herrschendem Vakuum auf die zu beschichtende Oberfläche gesprüht. Die zu beschichtende Oberfläche, insbesondere der Sensorträger, wird mit einem XY-Tisch bewegt.

Alternativ oder zusätzlich ist es möglich, dass die Düse über die zu beschichtende Oberfläche bewegt wird. Auch eine Kombination von beiden, also einer Bewegung des Tischs und der Düse in XY-Richtung gegeneinander ist möglich.

Bedingt durch die kinetische Energie der Beschichtungs-Partikel, insbesondere der Aluminiumoxid-Partikel, werden diese beim Auftreffen auf die zu beschichtende Oberfläche verformt und verdichtet. Die daraus resultierende Schicht ist äußerst dicht und riss frei.

Zur Herstellung einer dickeren Schicht können auch mehrere "Überfahrten" durchgeführt werden.

Es sei darauf verwiesen, dass die oben beschriebene Ausführungsform der Aerosol-Beschichtung nur beispielhaft zu sehen ist. Abwandlungen der Aerosol-Beschichtung können zum Beispiel sein, dass die Düse bewegt wird oder dass durch mehrere nacheinander angeordnete Düsen gesprüht wird.

Zur direkten Herstellung einer Struktur der mittels ADM hergestellten Schicht auf der zu beschichtenden Oberfläche, wird beispielsweise vor der Beschichtung eine Maske aufgebracht. Eine Möglichkeit ist hierbei die Verwendung von "Abschattmasken", die sich über der zu beschichtenden Oberfläche befinden und nur an den zu beschichtenden Stellen "Öffnungen" aufweisen.

Auch können durch eine spezielle Düsengeometrie und/oder durch die Bewegung der Düse und/oder des Tischs in XY-Richtung während der Abscheidung gewünschte Strukturen erzeugt werden.

Ebenfalls können durch Ein- und Aus-Schalten des Düsenstrahls definierte Strukturen erzeugt werden.

Weiterhin besteht die Möglichkeit durch Lift-off-Technik die Strukturierung einer ganzflächig abgeschiedenen ADM-Schicht zu realisieren. Dazu wird eine Photolackschicht mittels Licht oder Elektronenstrahl auf der zu beschichteten Oberfläche strukturiert. Dann wird die Oberfläche ganzflächig mit ADM beschichtet, wobei anschließend durch Ablösen des Photolacks die aufliegende ADM-Schicht entfernt wird.

Bei ADM handelt es sich um ein kaltes Beschichtungsverfahren. Da die Aluminiumoxid-Partikel bereits in der α-Phase vorliegen, findet bei einer Temperaturbeaufschlagung keine Phasenänderung statt. Somit werden Undichtigkeiten in der erzeugten Schicht bedingt durch Risse und Poren vermieden.

Es ist möglich, dass die mindestens eine elektrisch leitfähige Schicht strukturiert wird und/oder mittelbar oder unmittelbar auf den Sensorträger in strukturierter Form aufgebracht wird. Als Strukturierung bzw. strukturierte Form ist eine derartige Form der elektrisch leitfähigen Schicht zu verstehen, die nicht lückenlos bzw. nicht ohne Ausnehmungen ausgebildet ist. Vielmehr weist eine strukturierte elektrisch leitfähige Schicht beispielsweise eine Mäanderform auf. Auch andere Formen mit Ausnehmungen und/oder Gräben und/oder Öffnungen sind denkbar.

Beispielsweise mittels eines Druckverfahrens kann eine elektrisch leitfähige Schicht strukturiert mittelbar oder unmittelbar auf einem Sensorträger aufgebracht werden. Des Weiteren ist es möglich, dass zunächst eine durchgehende glatte Schicht unmittelbar oder mittelbar auf den Sensorträger aufgebracht wird und Gräben und/oder Ausnehmungen und/oder Öffnungen in einem weiteren Schritt in die Schicht eingebracht werden.

Das Strukturieren der elektrisch leitfähigen Schicht kann beispielsweise fotolithografisch und/oder per Laser erfolgen.

In einer weiteren Ausführungsform der Erfindung ist es möglich, dass nach dem Aufbringen mindestens einer weiteren Schicht, insbesondere der Passivierungsschicht und/oder der Isolationsschicht, die hergestellte Anordnung vereinzelt wird. Demnach ist es möglich, mehrere Sensoren, insbesondere mehrere Temperatursensoren, zunächst zusammenhängend herzustellen, um diese anschließend zu vereinzeln.

Ein weiterer nebengeordneter Aspekt der Erfindung betrifft einen Sensor, insbesondere einen Temperatursensor, umfassend mindestens eine elektrisch leitfähige Schicht und mindestens eine Passivierungsschicht und/oder eine Isolationsschicht. Der erfindungsgemäße Sensor ist nach einem erfindungsgemäßen Verfahren hergestellt.

Der erfindungsgemäße Sensor, insbesondere der erfindungsgemäße Temperatursensor, beruht auf dem Gedanken, dass die Passivierungsschicht und/oder die Isolationsschicht mittels Aerosol-Abscheidung (Aerosol Deposition Method) hergestellt ist. Eine derart hergestellte Schicht eines Sensors ist im Rahmen eines kalten Beschichtungsverfahrens aufgetragen. Bei der aufgetragenen Schicht handelt es sich um eine hermetisch dichte Schicht.

Die mittels Aerosol-Abscheidung hergestellte Schicht des Sensors weist Aluminiumoxid (Al₂O₃) mit einer Reinheit der Ausgangsstoffe von mindestens 94 Gew.-% auf.

Des Weiteren ist es erfindungsgemäß, wenn mindestens eine mittels Aerosol-Abscheidung (ADM) hergestellte Schicht zu mindestens 95 % aus α-Aluminiumoxid (Al₂O₃) besteht.

Zur Bestimmung der kristallinen Phase einer abgeschiedenen Al₂O₃-Schicht wird vorzugsweise die Methode der Röntgenbeugung eingesetzt. Hierzu wird ein Röntgendefraktometer des Typs Stadi P des Herstellers Stoe & Cie GmbH verwendet. Zur Quantifizierung von Phasen wird das Rietveld-Verfahren angewendet. Alternativ ist es möglich, dass definierte Gemische der gefragten Komponenten zum Vergleich hergestellt und analysiert werden.

Die Reinheit des Pulvers, insbesondere des Aluminiumoxid-Pulvers, wird mittels Emissionsspektrometrie bestimmt. Zur Messung werden ICP-Spektrometer der Typen iCAP 6500 duo oder iCAP 7400 duo des Herstellers ThermoFisher Scientific verwendet.

Die Messungen werden entsprechend der Norm DIN EN ISO 11885 durchgeführt.

Bei Aluminiumoxid (Al₂O₃)-Pulver werden 100 mg der Probe mit 8 ml Chlorwasserstoff (HCl), 2 ml Salpetersäure (HNO₃) und 1,5 ml Fluorwasserstoff (HF) versetzt und mit Hilfe eines Mikrowellendruckaufschlusses aufgeschlossen. Anschließend wird die gelöste Probe in ein Proberöhrchen überführt und mit Reinstwasser aufgefüllt. Die Messlösung wird in das Messgerät gepumpt, dort zerstäubt, wobei das Aerosol in ein Argon-Plasma eingebracht wird. Dort werden die Bestandteile der Probe verdampft, atomisiert, angeregt und zum Teil ionisiert. Das bei der Rückkehr der Atome/Ionen in den Grundzustand abgegebene Licht wird anschließend detektiert. Die Wellenlängen des emittierten Lichts sind dabei charakteristisch für die jeweiligen in der Probe enthaltenen Elemente. Die Intensität der Wellenlängen ist proportional zur Konzentration des jeweiligen Elements.

Vorzugsweise beträgt der spezifische elektrische Widerstand bei einer mittels Aerosol-Abscheidung hergestellten Al₂O₃-Schicht bei einer Temperatur von 600 °C mindestens 10¹⁰ Ωcm.

Die Bestimmung des spezifischen elektrischen Widerstand (RS) der mittels Aerosol-Abscheidung (ADM) hergestellten Schicht, insbesondere der Aluminiumoxid-Schicht, erfolgt vorzugsweise mit einer 4-Punkt-Messung oder einer 2-Punkt-Messung entsprechend der Norm ASTM D257-07. Hierzu wird zunächst ein Substrat, z.B. Glas, mit der Größe von beispielsweise 20 mm x 60 mm bereitgestellt. Die zu untersuchende Schicht, insbesondere das Aluminiumoxid-Material, wird auf das Substrat abgeschieden. Die jeweiligen Enden werden mit flächigen Metallstreifen bedampft oder bedruckt. Die Metallstreifen sind parallel zueinander mit einem Abstand von z.B. 10 mm angeordnet. Eine Stromquelle wird mit den beiden Kontakten verbunden und ein Stromwert vorgegeben.

Im Fall der 4-Punkt-Messung wird mit zwei aufgedrückten Prüfspitzen und einem Potentiometer (Hewlett-Packard 4355A) der Potentialabfall zwischen den Metallstreifen gemessen und der Oberflächenwiderstand (SR) bestimmt. Die Schichtdicke (d) wird an einer parallel hergestellten Schicht bestimmt. Für den spezifischen elektrischen Widerstand (RS) gilt: RS = SR × d.

Des Weiteren kann mindestens eine mittels Aerosol-Abscheidung hergestellte Schicht eine Schichtdicke von 100 nm - 50 µm aufweisen. Zur Bestimmung der Schichtdicke wird vorzugsweise ein mechanisches Perthometer (Tastschnittgerät) verwendet. Dazu wird ein Substrat, z.B. ein Glasträger mit der Größe von beispielsweise 20 mm x 60 mm bereitgestellt. Ein Teil der Substratoberfläche wird z.B. mit einer angeklammerten Metallfolie maskiert. Die zu untersuchende Schicht wird auf das Substrat abgeschieden. Nach Entfernung der Maske wird die Schichtdicke durch Überfahren der Schichtstufe mit dem Taster (Stylus) eines mechanischen Perthometers (Tencor 500, Auflösung < 1 nm) bestimmt.

Vorzugsweise ist die mindestens eine mittels Aerosol-Abscheidung hergestellte Schicht feuchtigkeitsdicht. Die Dichtigkeit der mittels Aerosol-Abscheidung hergestellten Schicht gegenüber eindringender Feuchtigkeit wird entsprechend der Norm DIN EN 60749-8 : 2003-12 bestimmt. Hierbei wird ein Pt200-Widerstandssensor (HDA 420) mit der zu prüfenden Schicht beschichtet und anschließend bei Raumtemperatur für mindestens 15 Minuten in ein Wasserbad getaucht. Nach Entnahme und Trocknung bei Raumtemperatur wird der Widerstand des Sensors gemessen. Für Schichten mit ausreichender Feuchtigkeitsdichtigkeit darf sich der Widerstand bei +25 °C nicht um mehr als 1 % des Ausgangswertes verändern.

Des Weiteren kann der erfindungsgemäße Sensor dadurch gekennzeichnet sein, dass die mittels Aerosol-Abscheidung hergestellte Schicht nach einer mindestens zweistündigen Temperaturbehandlung bei mehr als 1.200 °C und nachfolgender Abkühlung auf 25 °C weniger als einen Riss pro Quadratzentimeter aufweist.

Vorzugsweise weist die mittels Aerosol-Abscheidung hergestellte Schicht einen thermischen Ausdehnungskoeffizienten im Bereich von 4 • 10⁻⁶ K⁻¹ bis 14 • 10⁻⁶ K⁻¹ auf. Der thermische Ausdehnungskoeffizient kann beispielsweise mittels Dilatometrie bestimmt werden.

Vorzugsweise weist die mittels Aerosol-Abscheidung hergestellte Schicht eine Porosität von weniger als 1 % auf. Die Porosität einer mittels Aerosol-Abscheidung hergestellten Schicht kann beispielsweise mittels Quecksilberporosimetrie gemessen werden. Zur Durchführung einer Quecksilberporosimetrie werden vorzugsweise Geräte der Firma Porotec (Pascal 140 im Niederdruckbereich, Pascal 440 im Hochdruckbereich) verwendet. Gemäß der Norm DIN 66133 werden die Porenvolumenverteilung und die spezifische Oberfläche von Feststoffen durch Quecksilberintrusion bestimmt. Vorzugsweise wird die betreffende Schicht vor der Messung bei 200 °C ca. eine Stunde ausgeheizt.

Vorzugsweise weist die mittels Aerosol-Abscheidung hergestellte Schicht eine höhere Härte auf als konventionell gefertigte Schichten. So beträgt beispielsweise die Härte einer aus Al₂O₃ (>99,9%) hergestellten Schicht nach dem ADM-Verfahren 10 GPa. Die Härte der Schichten, die mit dem PVD- bzw. dem Siebdruckverfahren hergestellt wurden (in beiden Fällen ebenfalls reines Al₂O₃) liegt jeweils bei 4,7 GPa und 2,8 GPa.

Die Härte einer mittels Aerosol-Abscheidung hergestellten Schicht kann beispielsweise mittels Nanoindentation gemessen werden. Die Nano-Test-Plattform kontrolliert die Bewegung eines Diamanten in Kontakt mit der Probe. Eine Stromänderung an einer Spule resultiert in einer aufgeprägten Kraft (elektromagnetisches Kraft-Aktorprinzip) und bewirkt eine Änderung der Diamantposition. Während der Härtemessung dringt die Diamantspitze kontinuierlich in die Probe ein. Über die Kapazitätsänderung eines Kondensators wird diese Wegänderung als Funktion der Last dokumentiert. Folglich können durch exakte Kalibration des angelegten Spulenstroms und durch die Messung der Wegänderung sowohl die Eindringtiefe, wie auch die aufgeprägte Last bestimmt werden. Zur Analyse der Last-Eindringtiefen-Kurve wird in der Regel die von Oliver&Pharr vorgeschlagene Methode verwendet.

Bei der mittels Aerosol-Abscheidung hergestellten Schicht kann es sich um ein Dielektrikum mit einer Permittivität oder um einen Isolierstoff handeln. Des Weiteren ist es möglich, dass ein Elektronenleiter als mittels Aerosol-Abscheidung hergestellte Schicht ausgebildet ist. Des Weiteren kann es sich bei der Schicht um eine Funktionsschicht handeln.

Der erfindungsgemäße Sensor umfasst des Weiteren einen Sensorträger, der aus Keramik und/oder Metall und/oder einer Metalllegierung und/oder Glas und/oder einer Glaskeramik und/oder Kunststoff bestehen kann. In besonders bevorzugter Art und Weise weist der Sensorträger Aluminiumoxid und/oder Magnesiumoxid und/oder Zirkoniumoxid, das auch stabilisiert sein kann, und/oder Siliziumoxid auf. Vorzugsweise beträgt der thermische Ausdehnungskoeffizient des Sensorträgers 0,05 • 10⁻⁶ K⁻¹ bis 15 • 10⁻⁶ K⁻¹.

Der spezifische elektrische Widerstand des Sensorträgers bzw. des Materials des Sensorträgers beträgt bei 600 °C mindestens 10¹⁰ Ωcm. Bezüglich der Bestimmung des spezifischen elektrischen Widerstands kann auf die bereits beschriebene Messung entsprechend der Norm ASTM D257-07 zurückgegriffen werden.

Es ist möglich, dass der Sensorträger elektrisch leitfähig ausgebildet ist.

Die elektrisch leitfähige Schicht des Sensors ist aus Platin (Pt) gebildet.

Alternativ ist es möglich, dass die mindestens eine elektrisch leitfähige Schicht aus einer leitenden Keramik wie z.B. Siliziumkarbid (SiC) hergestellt ist. Des Weiteren ist es möglich, dass die elektrisch leitfähige Schicht eine leitende Keramik aufweist.

Die mindestens eine elektrisch leitfähige Schicht kann strukturiert sein. Es ist möglich, dass die elektrisch leitfähige Schicht eine Strukturierung in Form von Linien und/oder Leiterschleifen und/oder mäanderförmigen Strukturen und/oder interdigitalen Strukturen und/oder Netzwerken und/oder Pads aufweist.

Die Struktur der elektrisch leitfähigen Schicht, kann wie bereits zuvor beschrieben, im Rahmen des erfindungsgemäßen Verfahrens nachträglich in die elektrisch leitfähige Schicht eingebracht werden. Außerdem ist es möglich, die elektrisch leitfähige Schicht bereits in strukturierter Form unmittelbar oder mittelbar auf den Sensorträger aufzutragen.

Die elektrisch leitfähige Schicht ist zumindest abschnittsweise durch mindestens eine Funktionsschicht, insbesondere eine Schutzschicht und/oder Sensorschicht und/oder Isolationsschicht und/oder Barriere-Schicht, abgedeckt. Vorzugsweise ist die elektrisch leitfähige Schicht zumindest abschnittsweise von einer mittels Aerosol-Abscheidung hergestellten Schicht abgedeckt.

Bei der mindestens einen Zwischenschicht, die sich zwischen dem Sensorträger und der elektrisch leitfähigen Schicht befindet, kann es sich beispielsweise um eine Ausgleichsschicht zur Glättung oder um eine Haftschicht oder um eine Schicht zur mechanischen Entkopplung oder um eine Schicht zur elektrischen Isolation oder um eine Schicht zur Vermeidung von Rissbildung in der elektrisch leitenden Schicht handeln. Es ist möglich, dass mehrere Zwischenschichten zwischen dem Sensorträger und der mindestens einen elektrisch leitfähigen Schicht ausgebildet sind.

In einer Ausführungsform der Erfindung ist es möglich, dass mindestens zwei elektrisch leitfähige Schichten ausgebildet sind, wobei zwischen den mindestens zwei elektrisch leitfähigen Schichten mindestens eine mittels Aerosol-Abscheidung hergestellte Schicht ausgebildet sein kann.

Es ist möglich, dass mindestens eine elektrisch leitfähige Struktur jeweils im Wechsel mit mindestens einer mittels Aerosol-Abscheidung hergestellten Schicht aufgebracht ist. Die oberste elektrisch leitfähige Schicht kann zumindest teilweise freiliegen, d.h. zumindest abschnittsweise nicht mit einer weiteren Schicht abgedeckt sein.

Sofern der Sensor mindestens zwei elektrisch leitfähige Schichten aufweist, ist es möglich, dass die elektrisch leitfähigen Schichten über mindestens eine Messbrücke miteinander verbunden sind.

Des Weiteren können die elektrisch leitfähigen Strukturen vollständig oder zumindest abschnittsweise voneinander isoliert sein. Die Isolation kann beispielsweise mittels einer mittels Aerosol-Abscheidung hergestellten Schicht erfolgen.

Mindestens eine elektrisch leitfähige Schicht kann zum Heizen und/oder Messen dienen. Des Weiteren ist es möglich, dass mindestens eine elektrisch leitfähige Schicht zur Messung von Parametern wie beispielsweise der elektrischen Leitfähigkeit und/oder dem elektrischen Widerstand und/oder der Impedanz und/oder der Spannung und/oder der Stromstärke und/oder der Frequenz und/oder der Kapazität und/oder der Phasenverschiebung, verwendet werden kann.

Ein weiterer nebengeordneter Aspekt der Erfindung betrifft die Verwendung eines erfindungsgemäßen Sensors in einem Fahrzeug zur Messung einer Temperatur und/oder von Partikelmengen und/oder von Rußpartikelmengen und/oder von Reaktionswärme und/oder eines Gasgehalts und/oder eines Gasflusses. Es ergeben sich ähnliche Vorteile, wie diese bereits im Zusammenhang mit dem erfindungsgemäßen Verfahren und/oder im Zusammenhang mit dem erfindungsgemäßen Sensor dargelegt wurden.

Im Folgenden wird die Erfindung anhand von Ausführungsbeispielen unter Bezug auf die beigefügten schematischen Zeichnungen näher beschrieben. Darin zeigen:
- Fig. 1 - 3: Ergebnisse vergleichender Temperaturdriftmessungen hinsichtlich eines erfindungsgemäßen Sensors im Vergleich zu bekannten Sensoren;
- Fig. 4a + 4b: Draufsichten auf Al₂O₃-Schichten, wobei die Al₂O₃-Schicht der Fig. 4a mittels PVD-Verfahren und die Al₂O₃-Schicht der Fig. 4b mittels ADM hergestellt ist;
- Fig. 5a - 5c: unterschiedlich aufgebaute Sensoren;
- Fig. 6a - 6d: unterschiedlich aufgebaute Sensoren mit Isolations- und Abdeckschicht; und
- Fig. 7a - 7c: unterschiedlich aufgebaute Sensoren mit mehreren Isolationsschichten und/der Abdeckschichten.

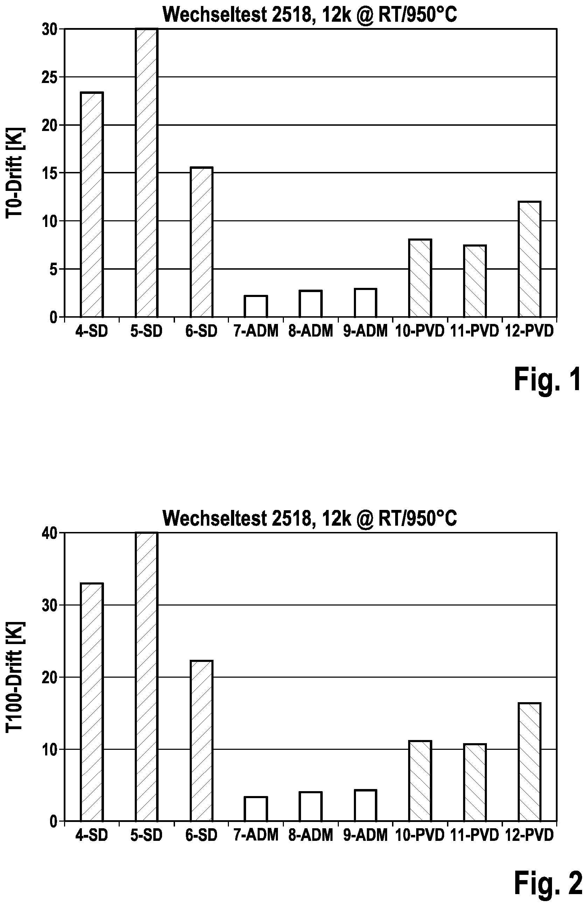

In Fig. 1 - 3 wird dargelegt, inwiefern die Temperaturdrift eines erfindungsgemäßen Sensors im Vergleich zu bekannten Sensoren, die mittels standardmäßiger Verfahren hergestellt sind, positiv beeinflusst werden kann.

Der erfindungsgemäße Sensor weist eine elektrisch leitfähige Schicht aus Platin und eine Passivierungsschicht aus Aluminiumoxid (Al₂O₃) auf. Die Aluminiumoxid-Schicht ist mittels Aerosol-Abscheidung hergestellt.

Fig. 1 - 3 zeigen einen Vergleich hinsichtlich unterschiedlich aufgetragener Al₂O₃-Passivierungsschichten. Die ersten drei Balken betreffen jeweils Sensoren, die eine Al₂O₃-Schicht aufweisen, die mittels eines Siebdruckverfahrens aufgebracht wurden.

Die Balken 4 - 6 betreffen hingegen Al₂O₃-Schichten, die mittels einer Aerosol-Abscheidung (ADM) aufgetragen sind.

Die Balken 7 - 9 betreffen hingegen Al₂O₃-Schichten, die mittels PVD (Physical Vapour Deposition)-Verfahren auf einer Platinstruktur aufgebracht sind.

Der Aufbau der Sensoren, d.h. die Platinschichten, die Schichtdicken und die Abmessungen waren gleich. Mit den fertiggestellten Sensoren wurden Temperaturwechseltests durchgeführt. Dabei wurden die Sensoren mittels einer Vorrichtung in einen Kammerofen eingebracht und dem Kammerofen wieder entnommen. Sobald sich die Sensoren außerhalb des Kammerofens befanden, wurden diese zusätzlich mit Luft angeblasen, so dass eine schnelle Abkühlung erreicht wurde.

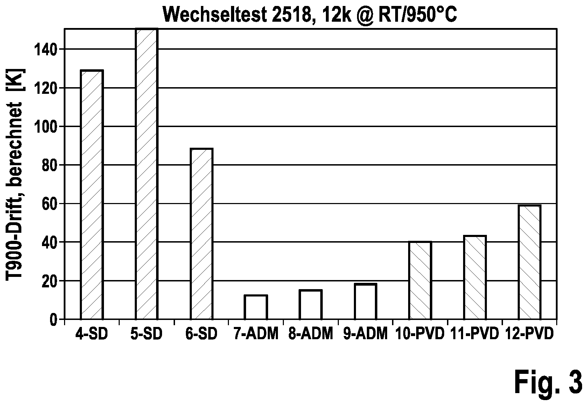

Die Grafik der Fig. 1 zeigt die Temperaturdrift in Kelvin nach 12.000 Zyklen bei 0 °C. Die Fig. 2 stellt in der Grafik die Temperaturdrift in Kelvin nach 12.000 Zyklen gemessen bei 100 °C dar. Die Fig. 3 stellt in der Grafik die Temperaturdrift in Kelvin nach 12.000 Zyklen gemessen bei 900 °C dar.

Es ist eindeutig zu erkennen, dass bei sämtlichen Temperaturen, d.h. bei 0 °C und bei 100 °C und bei 900 °C die Sensoren, die eine Passivierungsschicht aus Al₂O₃ aufweisen, die mittels ein Aerosol-Abscheidung (ADM) aufgebracht wurden, eine signifikant geringere Drift aufweisen.

Diese Testergebnisse bestätigen, dass mittels Aerosol-Abscheidung (ADM) hergestellte Passivierungsschichten, insbesondere Al₂O₃-Schichten, einen Sensor signifikant verbessern, wobei die Anforderungen bezüglich der Stabilität um ein Vielfaches übertroffen werden.

In folgender Tabelle werden die elektrischen Widerstände der unterschiedlich hergestellten Isolationsschichten verglichen. Hierzu wurden Muster aufgebaut, bei denen die Al₂O₃-Isolationsschicht zwischen zwei Platin-Elektrodenflächen erstens mittels Aerosol-Abscheidung und zweitens mittels Siebdruckverfahren aufgebracht wurde. Die Schichtdicken betrugen jeweils 9 µm.

| Al₂O₃ mittels | Isolationswiderstand in GOhm bei Raumtemperatur | Isolationswiderstand in GOhm bei 250 °C |
|---|---|---|
| 1) ADM-Verfahren | 7,0 ± 3,08 | 25,7 ± 3,95 |
| 2) Siebdruck-Verfahren | 0,4 ± 0,16 | 2,1 ± 0,34 |

Es ergibt sich, dass die mittels Aerosol-Abscheidung hergestellte Schicht bei Raumtemperatur einen 17fach höheren elektrischen Isolationswiderstand als die siebgedruckte Schicht aufweist, d.h. die ADM-Schicht isoliert wesentlich besser. Bei 250 °C weist die mittels Aerosol-Abscheidung (ADM) hergestellte Schicht einen 12fach höheren Wert des Isolationswiderstands im Vergleich zu einer siebgedruckten Schicht auf.

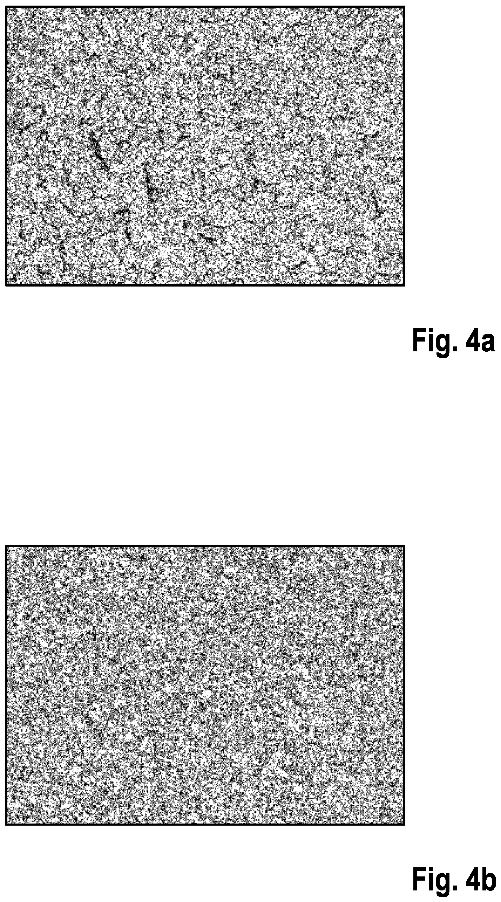

Fig. 4a zeigt eine Al₂O₃-Schicht, die konventionell mittels PVD-Verfahren hergestellt ist. Es sind Risse zu erkennen. Diese entstehen nach der Temperaturbehandlung wegen Schrumpfens bedingt durch die Phasenumwandlung von γ in α.

Fig. 4b zeigt eine Al₂O₃-Schicht, die mittels ADM hergestellt ist. Das Al₂O₃-Pulver liegt bei der Herstellung der Schicht als α-Phase vor. Da ADM ein kaltes Beschichtungsverfahren ist, findet keine Phasenumwandlung statt. Es entstehen keine Risse bei der Temperaturbehandlung.

Bedingt durch die geringe Porosität, der Rissfreiheit und der Fehlstellenarmut wird eine sehr dichte ADM-Schicht erreicht, die einen hohen elektrischen Isolationswiderstand bei gleichzeitig guter thermischer Wärmeleitfähigkeit aufweist.

Bedingt durch die beschriebenen positiven Eigenschaften wie z.B. dem hohen elektrischen Isolationswiderstand bei gleichzeitig guter thermischer Wärmeleitfähigkeit, lassen sich mit nach dem ADM-Verfahren hergestellte Schichten besonders gut für den Aufbau von Mehrschichtsystemen verwenden, bei denen ADM-Schichten im Wechsel mit leitfähigen Schichten aus Platin (Pt) für den Aufbau von Sensoren verwendet werden.

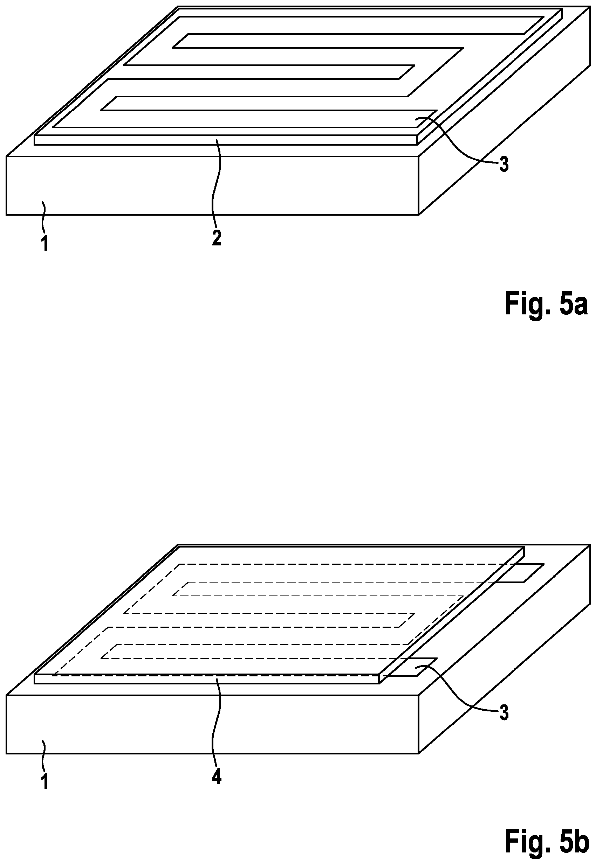

Fig. 5a zeigt einen einfachen Sensoraufbau. Auf einem Substratträger 1 ist eine ADM-Schicht 2 aufgebracht. Bedingt durch den sehr guten Isolationswiderstand dient die ADM-Schicht 2 als Isolationsschicht, wenn als Substratträgermaterial z. B. Metalle oder Oxide, wie z.B. stabilisiertes Zirkonoxid, mit geringem elektrischem Widerstand verwendet werden.

Dieser Aufbau ist auch als Ausgleichsschicht angebracht, wenn der Substratträger 1 eine raue, topografische, poröse oder defekte Oberfläche aufweist oder wenn Defekte wie z. B. Risse oder kleine Löcher in der Oberfläche vorhanden sind. Als Material für diese ADM-Schicht hat sich α-Al₂O₃, bewährt. Auf der Isolationsschicht 2 ist mindestens eine leitfähige Struktur oder Fläche 3 aufgebracht, die aus Platin besteht.

Mit der Isolationsschicht 2 kann auch die Haftung von der leitfähigen Fläche oder Struktur 3 beeinflusst werden.

Fig. 5b zeigt einen Aufbau, bei dem mindestens eine leitfähige Schicht oder Struktur 3 auf einem Substratträger 1 aufgebracht ist. Als Substratträgermaterial hat sich α-Al₂O₃ bewährt. Die leitfähige Schicht oder Struktur 3 besteht aus Platin.

Die leitfähige Schicht oder Struktur 3 ist mit einer ADM-Schicht 4 abgedeckt. Als Schichtmaterial hat sich α-Al₂O₃ bewährt. Die ADM-Schicht 4 dient als Schutz- oder Passivierungsschicht, da so hergestellte Schichten sehr dicht sind und eine geringe Gasdurchlässigkeit aufweisen. Nicht abgedeckte Bereiche der leitfähigen Schicht oder Struktur 3 dienen hier als Anschlussfläche zur elektrischen Kontaktierung. Anwendung findet dieser Aufbau als Temperatur- oder Heizwiderstand.

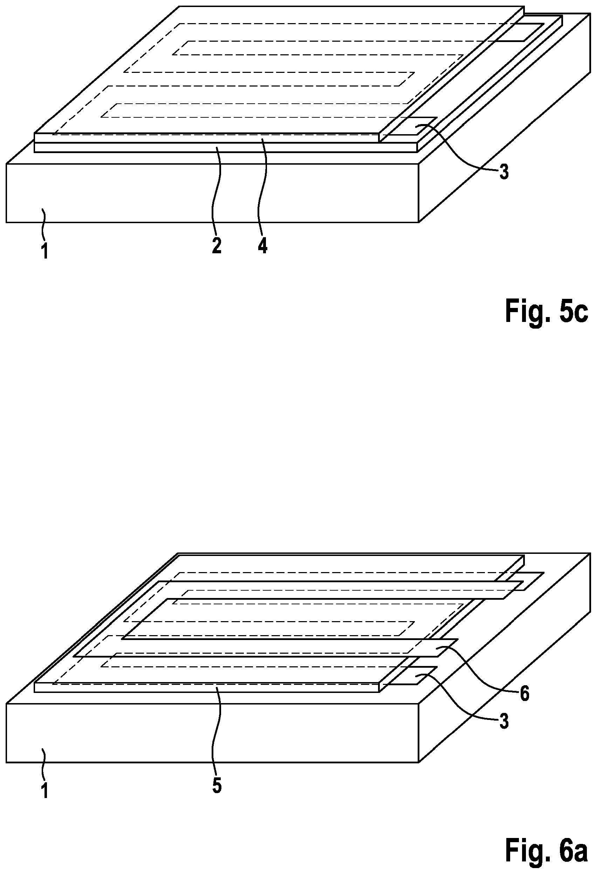

Fig. 5c zeigt einen Aufbau, der eine Kombination aus Fig. 5a und Fig. 5b darstellt.

Die leitfähige Schicht oder Struktur 3, die aus Platin hergestellt ist, ist zwischen zwei ADM-Schichten 2 und 4 eingebettet. Dieser Aufbau beinhaltet die Vorteile der Isolationsschicht 2 und der Abdeck- bzw. Passiervierungsschicht 4 und findet Verwendung als Temperatur- oder Heizwiderstand.

Nachfolgende Designbeispiele zeigen besonders den Vorteil der mit ADM hergestellter Schichten. Die so hergestellten Schichten weisen eine geringe Porosität auf, sind rissfrei und arm an Fehlstellen und haben eine sehr gute Dichte. Besonders bewährt hat sich α-Al₂O₃ als ADM-Schichtmaterial, da diese Schichten einen hohen elektrischen Isolationswiderstand bei gleichzeitig guter thermischer Wärmeleitfähigkeit aufweisen. Je nach Anwendung sind Schichtdicken im Bereich von 0,5 bis 50 µm sinnvoll. Besonders bewährt haben sich Schichtdicken von 5 bis 10 µm.

Fig. 6a zeigt eine Weiterführung des Aufbaus von Fig. 5b. Die die erste leitfähige Fläche oder Struktur 3 abdeckende ADM-Schicht 5 ist hier eine Isolationsschicht, auf der eine weitere leitfähige Fläche oder Struktur 6 aufgebracht ist. Das Isolationsschichtmaterial besteht aus α-Al₂O₃.

Die hier dargestellte leitfähige Fläche oder Struktur 6 ist als Widerstandschleife ausgeführt und stellt einen Heizer dar. Verwendet wird der Aufbau zum Beispiel als Flow- oder Massenflusssensor nach dem Anemometer Prinzip, bei dem eine leitfähige Struktur 3 als Temperaturwiderstand und die andere leitfähige Struktur 6 als Heizwiderstand verwendet wird. Gemessen wird der proportionale Wärmeverlust.

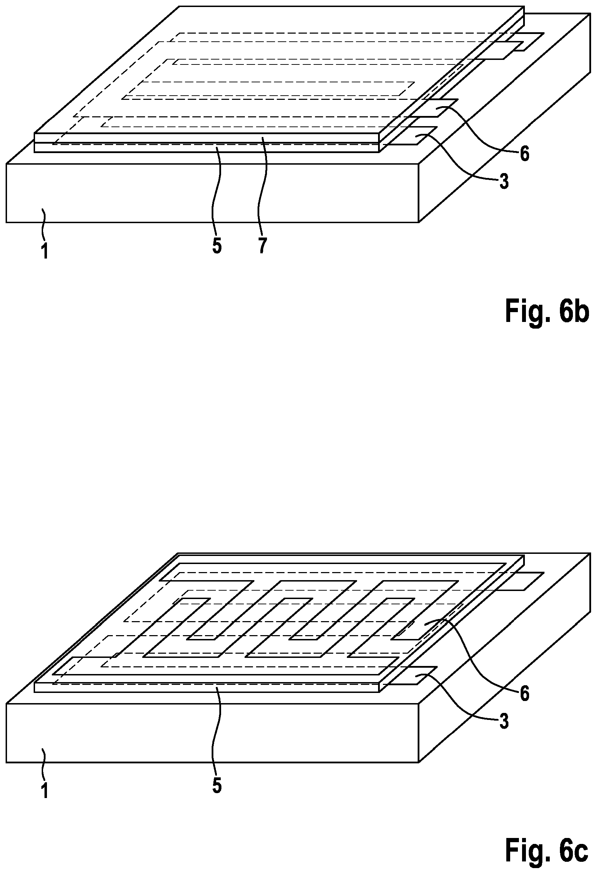

Fig. 6b zeigt die Weiterführung des Sensoraufbaus von Fig. 6a. Zusätzlich ist als oberste Schicht eine ADM-Schicht als Passivierungsschicht 7 aufgebracht und schützt die darunter befindliche leitfähige Fläche oder Struktur 6 gegen korrosiven Angriff.

Fig. 6c zeigt eine Aufbauvariante von Fig. 6a, wobei hier die obere leitfähige Schicht oder Struktur 6 als Doppelelektroden-Struktur in Form einer IDE-Struktur ausgebildet ist. Dieser Aufbau kann als Leitfähigkeitssensor verwendet werden. Mit der IDE-Struktur wird der Widerstand zwischen den Elektroden gemessen, wenn diese in eine Flüssigkeit oder einen Gasstrom eingebracht werden. Auch lassen sich Ablagerungen auf der Sensoroberfläche mittels resistiver Messung bestimmen.

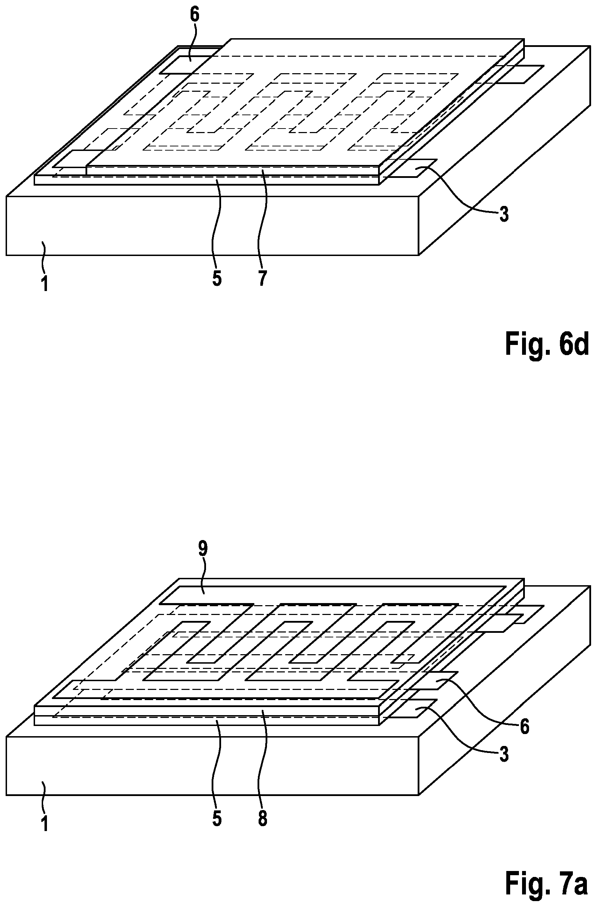

Fig. 6d zeigt eine Weiterführung des Sensoraufbaus von Fig. 6c. Zusätzlich ist als oberste Schicht eine ADM-Schicht als Isolations- oder Passivierungsschicht 7 aufgebracht. Die von Fig. 6c beschrieben Sensoraufgaben können mittels kapazitiver Messungen oder Impedanz-Messungen ausgewertet werden.

Fig. 7a zeigt ein Sensordesign mit drei leitfähigen Flächen oder Strukturen 3, 6 und 9 auf einem Substratträger 1. Die leitfähigen Flächen oder Strukturen 3, 6 und 9 sind mindestens ein Temperaturwiderstand, ein Heizwiderstand und eine Elektrodenstruktur. Untereinander sind die leitfähigen Flächen oder Strukturen 3, 6 und 9 mit mindestens je einer ADM-Schichten 5, 8 elektrisch voneinander isoliert. Dieser Aufbau kann als Leitfähigkeitssensor verwendet werden, wobei für die IDE-Struktur zur Messung der Leitfähigkeit, mindestens eine Heizstruktur zum Temperieren des Sensors verwendet wird. Eine Widerstandsstruktur kann zur Temperaturmessung verwendet werden.

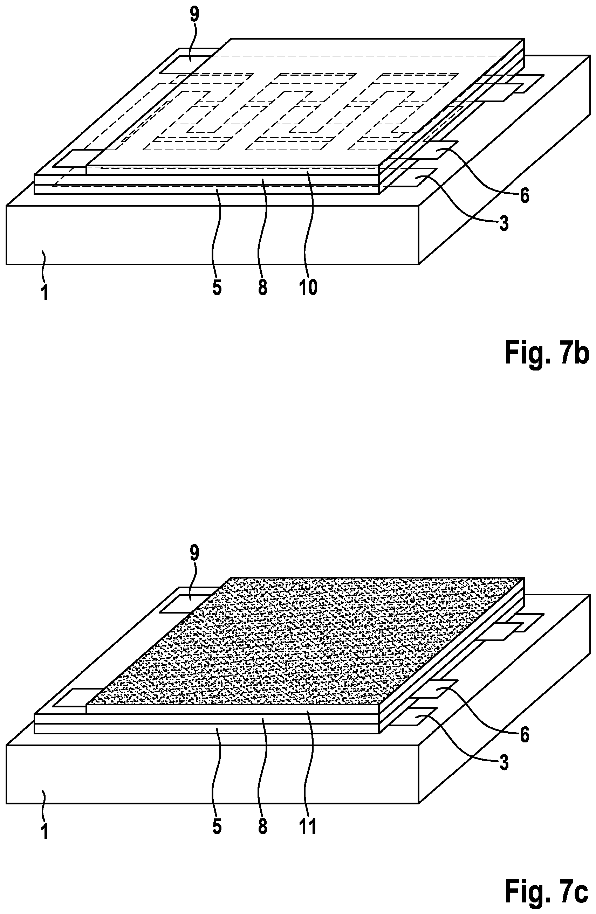

Fig. 7b zeigt eine weitere Ausführungsform von Fig. 7a, die zusätzlich als oberste Schicht eine ADM-Schicht als Isolations- oder Passivierungsschicht 10 enthält. Mit diesem Aufbau kann eine Oberflächenablagerung auf der obersten ADM-Schicht 10 mittels einer kapazitiven Messung oder Impedanz- Messung nachgewiesen werden.

Fig. 7c zeigte eine Weiterführung der Ausführungsform von Fig. 7a, wobei zusätzlich über der IDE-Struktur eine weitere Schicht 11 aufgebracht ist. Diese Schicht 11 dient als Funktionsschicht, die in Abhängigkeit von bestimmten Gasen die elektrischen Eigenschaften verändert. Dieser Aufbau kann als Gassensor verwendet werden.

### Bezugszeichenliste

- 1: Substratträger
- 2: Isolationsschicht (I) mittels (ADM)
- 3: Leitfähige Schicht (I) oder Struktur(en)
- 4: Abdeckschicht (I) mittels ADM
- 5: Isolationsschicht (II) mittels (ADM)
- 6: Leitfähige Schicht (II) oder Struktur(en)
- 7: Abdeckschicht (II) mittels ADM
- 8: Isolationsschicht (III) mittels (ADM)
- 9: Leitfähige Schicht (III) oder Struktur(en)
- 10: Abdeckschicht (III) mittels ADM
- 11: Funktionsschicht

## Patentansprüche

1. Verfahren zur Herstellung eines Sensors, insbesondere eines Temperatursensors, umfassend mindestens eine elektrisch leitfähige Schicht und mindestens eine Passivierungsschicht und/oder eine Isolationsschicht,
wobei die Passivierungsschicht und/oder die Isolationsschicht mittels Aerosol-Abscheidung (Aerosol Deposition Method, ADM) hergestellt wird, bei der Aerosol-Abscheidung ein Pulver aus in der α-Phase vorliegenden Aluminiumoxid (Al₂O₃) mit einer Reinheit der Ausgangsstoffe von mindestens 94 Gew.-% verwendet wird,
wobei das Verfahren die Schritte umfasst:
a) Bereitstellen eines Sensorträgers;
b) unmittelbares oder mittelbares Aufbringen der mindestens einen elektrisch leitfähigen Schicht auf den Sensorträger;
c) Aufbringen der Passivierungsschicht und/oder der Isolationsschicht mittels Aerosol-Abscheidung (ADM), wobei
im Schritt c) als Trägergas Sauerstoff (O₂) verwendet wird.

2. Verfahren nach Anspruch 1,
**dadurch gekennzeichnet, dass**
im Schritt c) ein Pulver mit einer Reinheit der Ausgangsstoffe von mindestens 95 Gew. % verwendet wird.

3. Verfahren nach einem der Ansprüche 1 bis 2,
**dadurch gekennzeichnet, dass**
im Schritt c) eine Temperaturbeaufschlagung von höchstens 150 °C erfolgt.

4. Verfahren nach einem der Ansprüche 1 bis 3,
**dadurch gekennzeichnet, dass**
die mindestens eine elektrisch leitfähige Schicht strukturiert wird und/oder unmittelbar oder mittelbar auf den Sensorträger in strukturierter Form aufgebracht wird.

5. Sensor, insbesondere Temperatursensor, umfassend mindestens eine elektrisch leitfähige Schicht und mindestens eine Passivierungsschicht und/oder eine Isolationsschicht, wobei der Sensor mittels eines Verfahrens nach einem der Ansprüche 1 bis 4 hergestellt ist, wobei die Passivierungsschicht und/oder die Isolationsschicht mittels Aerosol-Abscheidung (Aerosol Deposition Method, ADM) hergestellt ist,
**dadurch gekennzeichnet, dass**
die mittels Aerosol-Abscheidung hergestellte Passivierungsschicht und/oder Isolationsschicht zu mindestens 95 Gew. % aus α-Aluminiumoxid (Al₂O₃) mit einer Reinheit der Ausgangsstoffe von mindestens 94 Gew.-% besteht, wobei die mindestens eine elektrisch leitfähige Schicht aus Platin (Pt) besteht.

6. Sensor nach Anspruch 5,
**dadurch gekennzeichnet, dass**
der spezifische elektrische Widerstand mindestens einer mittels Aerosol-Abscheidung hergestellten Schicht bei einer Temperatur von 600 °C mindestens 10¹⁰ Ωcm beträgt.

7. Sensor nach einem der Ansprüche 5 bis 6,
**dadurch gekennzeichnet, dass**
mindestens eine mittels Aerosol-Abscheidung (ADM) hergestellte Schicht eine Schichtdicke von 100 nm - 50 µm aufweist.

8. Sensor nach einem der Ansprüche 5 bis 7,
**dadurch gekennzeichnet, dass**
mindestens eine mittels Aerosol-Abscheidung (ADM) hergestellte Schicht eine Härte von mindestens 6 GPa aufweist.

9. Sensor nach einem der Ansprüche 5 bis 8,
**dadurch gekennzeichnet, dass**
mindestens eine mittels Aerosol-Abscheidung (ADM) hergestellte Schicht feuchtigkeitsdicht ist.

10. Sensor nach einem der Ansprüche 5 bis 9,
**gekennzeichnet durch**
einen Sensorträger, der Aluminiumoxid (Al₂O₃) mit einer Reinheit der Ausgangsstoffe von mindestens 94 Gew.-% aufweist.

11. Sensor nach einem der Ansprüche 5 bis 10,
**gekennzeichnet durch**
mindestens zwei elektrisch leitfähige Schichten, wobei zwischen den mindestens zwei elektrisch leitfähigen Schichten mindestens eine mittels Aerosol-Abscheidung hergestellte Schicht ausgebildet ist.

12. Verwendung eines Sensors nach einem der Ansprüche 5 bis 11 in einem Fahrzeug zur Messung einer Temperatur und/oder von Partikelmengen und/oder von Rußpartikelmengen und/oder von Reaktionswärme und/oder eines Gasgehalts und/oder eines Gasflusses.

## Claims

1. A method for manufacturing a sensor, in particular a temperature sensor, comprising at least one electrically conductive layer and at least one passivation layer and/or an insulation layer,
wherein the passivation layer and/or the insulation layer are manufactured via aerosol deposition (aerosol deposition method, ADM), aerosol deposition involves the use of a powder comprised of aluminum oxide (Al₂O₃) present in the α-phase with a purity of the starting materials of at least 94%w/w,
wherein the method comprises the following steps:
a) Providing a sensor carrier;
b) Applying the at least one electrically conductive layer directly or indirectly to the sensor carrier;
c) Applying the passivation layer and/or the insulation layer by means of aerosol deposition (ADM), wherein oxygen (O₂) is used as the carrier gas in step c).

2. The method according to claim 1,
**characterized in that**
a powder with a purity of the starting materials of at least 95 %w/w is used in step c).

3. The method according to one of claims 1 to 2,
**characterized in that**
exposure to a temperature of at most 150°C takes place in step c).

4. The method according to one of claims 1 to 3,
**characterized in that**
the at least one electrically conductive layer is structured and/or applied directly or indirectly to the sensor carrier in a structured form.

5. A sensor, in particular a temperature sensor, comprising at least one electrically conductive layer and at least one passivation layer and/or an insulation layer, wherein the sensor is manufactured by means of a method according to one of claims 1 to 4, wherein the passivation layer and/or the insulation layer is manufactured by means of aerosol deposition (aerosol deposition method, ADM),
**characterized in that**
at least 95 %w/w of the passivation layer and/or insulation layer manufactured by means of aerosol deposition consists of α-aluminum oxide (Al₂O₃) with a purity of the starting materials of at least 94 %w/w, wherein the at least one electrically conductive layer consists of platinum (Pt).

6. The sensor according to claim 5,
**characterized in that**
the specific electrical resistance of at least one layer manufactured by means of aerosol deposition measures at least 10¹⁰ Ωcm at a temperature of 600°.

7. The sensor according to one of claims 5 to 6,
**characterized in that**
at least one layer manufactured by means of aerosol deposition (ADM) has a layer thickness of 100 nm - 50 µm.

8. The sensor according to one of claims 5 to 7,
**characterized in that**
at least one layer manufactured by means of aerosol deposition (ADM) has a hardness of at least 6 GPa.

9. The sensor according to one of claims 5 to 8,
**characterized in that**
at least one layer manufactured by means of aerosol deposition (ADM) is moisture-proof.

10. The sensor according to one of claims 5 to 9,
**characterized by**
a sensor carrier, which has aluminum oxide (Al₂O₃) with a purity of the starting materials of at least 94 %w/w.

11. The sensor according to one of claims 5 to 10,
**characterized by**
at least two electrically conductive layers, wherein at least one layer manufactured by means of aerosol deposition is formed between the at least two electrically conductive layers.

12. Use of a sensor according to one of claims 5 to 11 in a vehicle for measuring a temperature and/or particle quantities and/or soot particle quantities and/or reaction heat and/or a gas content and/or a gas flow.

## Revendications

1. Procédé, destiné à fabriquer un capteur, notamment un capteur de température, comprenant au moins une couche conductrice d'électricité et au moins une couche de passivation et / ou une couche isolante,
la couche de passivation et / ou la couche isolante étant fabriquée par dépôt d'aérosol (Aérosol Deposition Method, ADM), lors du dépôt d'aérosol, une poudre d'un oxyde d'aluminium (Al₂O₃) présente dans la phase α, d'une pureté des substances de départ d'au moins 94 % en poids étant utilisée, le procédé comprenant les étapes consistant à :
a) mettre à disposition un support de capteur ;
b) appliquer directement ou indirectement l'au moins une couche conductrice d'électricité sur le support de capteur;
c) appliquer la couche de passivation et / ou la couche isolante par dépôt d'aérosol (ADM), dans l'étape c), l'oxygène (O₂) étant utilisé en tant que gaz porteur.

2. Procédé selon la revendication 1,
**caractérisé en ce que**
dans l'étape c) est utilisée une poudre d'une pureté des substances de départ d'au moins 95 % en poids.

3. Procédé selon l'une quelconque des revendications 1 à 2,
**caractérisé en ce que**
dans l'étape c) s'effectue la soumission à une température d'un maximum de 150 °C .

4. Procédé selon l'une quelconque des revendications 1 à 3,
**caractérisé en ce que**
l'on structure l'au moins une couche conductrice d'électricité et / ou on l'applique directement ou indirectement sur le support de capteur sous forme structurée.

5. Capteur, notamment capteur de température, comprenant au moins une couche conductrice d'électricité et au moins une couche de passivation et / ou une couche isolante, le capteur étant fabriqué au moyen d'un procédé selon l'une quelconque des revendications 1 à 4, la couche de passivation et / ou la couche isolante étant fabriquée par dépôt d'aérosol (Aérosol Deposition Method, ADM),
**caractérisé en ce que**
la couche de passivation et / ou la couche isolante fabriquée par dépôt d'aérosol est constituée à raison d'au moins 95 % en poids d'un oxyde d'aluminium α (Al₂O₃) d'une pureté des substances de départ d'au moins 94 % en poids, l'au moins une couche conductrice d'électricité étant constituée de platine (Pt).

6. Capteur selon la revendication 5,
**caractérisé en ce que**
la résistance électrique spécifique d'au moins une couche fabriquée par dépôt d'aérosol est d'au moins 10¹⁰ Ωcm à une température de 600 °C.

7. Capteur selon l'une quelconque des revendications 5 à 6,
**caractérisé**
**en ce qu'**au moins une couche fabriquée par dépôt d'aérosol (ADM) présente une épaisseur de couche de 100 nm à 50 µm.

8. Capteur selon l'une quelconque des revendications 5 à 7,
**caractérisé**
**en ce qu'**au moins une couche fabriquée par dépôt d'aérosol (ADM) présente une dureté d'au moins 6 GPa.

9. Capteur selon l'une quelconque des revendications 5 à 8,
**caractérisé en ce**
**qu'**au moins une couche fabriquée par dépôt d'aérosol (ADM) est étanche à l'humidité.

10. Capteur selon l'une quelconque des revendications 5 à 9,
**caractérisé par**
un support de capteur, qui comporte un oxyde d'aluminium (Al₂O₃) d'une pureté des substances de départ d'au moins 94 % en poids.

11. Capteur selon l'une quelconque des revendications 5 à 10,
**caractérisé par**
au moins deux couches conductrices d'électricité, au moins une couche fabriquée par dépôt d'aérosol étant formée entre les au moins deux couches conductrices d'électricité.

12. Utilisation d'un capteur selon l'une quelconque des revendications 5 à 11 dans un véhicule, pour mesurer une température et / ou des quantités de particules et / ou des quantités de particules de noir de carbone et / ou une chaleur de réaction et / ou une teneur en gaz et / ou un flux gazeux.
